# EUROPEAN PATENT APPLICATION

(11) **EP 4 723 337 A1**
(43) Date of publication of application: **08.04.2026**
(21) Application number: 25201290.1
(22) Date of filing: 10.09.2025
(51) Int. Cl.: H01M 50/293, H01M 10/658, H01M 10/659

(54) **SPACER, METHOD OF MANUFACTURING THE SAME, AND BATTERY MODULE INCLUDING THE SPACER**

(30) Priority: 12.09.2024 KR 20240124898
(71) Applicant: SAMSUNG SDI CO., LTD., Yongin-si, Gyeonggi-do 17084 (KR)
(72) Inventor: Kim, Junyoung, Gyeonggi-do 17084 (KR)
(74) Representative: Michalski Hüttermann & Partner Patentanwälte mbB

(57) **Abstract**

Examples of the disclosure include a spacer including a polymer matrix, and an endothermic flame retardant dispersed in the polymer matrix. The polymer matrix includes a fiberized polymer, and the endothermic flame retardant is included in a content in a range of ≥ 60 wt% to ≤ 98 wt% with respect to a total weight of the spacer.

## Description

### BACKGROUND

### 1. Field

The present disclosure relates to a spacer, a method of manufacturing the spacer, and a battery module including the spacer.

### 2. Description of the Related Art

Unlike primary batteries that typically cannot be recharged, secondary batteries can be charged and discharged. Low-capacity battery cells are used in small portable electronic devices such as, e.g., smartphones, feature phones, laptop computers, digital cameras, camcorders, and the like, and high-capacity battery cells are widely used as driving power sources and power storage batteries for, e.g., motors in hybrid vehicles, electric vehicles, and the like. Such a battery cell includes an electrode assembly including a positive electrode and a negative electrode, a case for accommodating the electrode assembly, and an electrode terminal connected to the electrode assembly.

### SUMMARY

Example embodiments of the present disclosure include a spacer configured to absorb heat released in the event of a battery fire to reduce or suppress a temperature rise and reduce or prevent a chain reaction of fire, a method of manufacturing the spacer, and a battery module including the spacer.

However, the technical objects to be addressed by the present disclosure are not limited to the above, and other objects that are not described herein are clearly understood by those skilled in the art from the following disclosure.

An example embodiment of the present disclosure includes a spacer including a polymer matrix, and an endothermic flame retardant dispersed in the polymer matrix, wherein the polymer matrix includes a fiberized polymer, and the endothermic flame retardant is included in a content in a range of ≥ 60 wt% to ≤ 98 wt% with respect to a total weight of the spacer.

In an example embodiment, the endothermic flame retardant may be or include a hydroxide inorganic compound.

In an example embodiment, the fiberized polymer may include at least one of polytetrafluoroethylene, cellulose nanofibril, and polycaprolactam.

In an example embodiment, a mass ratio of the endothermic flame retardant to the fiberized polymer may be in a range of ≥ 1.5 to ≤ 49.

In an example embodiment, a fiberization rate of the fiberized polymer may be in a range of ≥ 1 % to ≤ 40 %.

In an example embodiment, an average diameter of the endothermic flame retardant may be in a range of ≥ 0.1 µm to ≤ 50 µm.

In an example embodiment, the endothermic flame retardant may include at least one of magnesium hydroxide, aluminum hydroxide, antimony trioxide, and antimony pentoxide.

Another example embodiment of the present disclosure includes a battery module including a plurality of battery cells, and spacers disposed between the plurality of battery cells, wherein each of the spacers includes a polymer matrix and an endothermic flame retardant dispersed in the polymer matrix. The polymer matrix includes a fiberized polymer, and the endothermic flame retardant is included in a content in a range of ≥ 60 wt% to ≤ 98 wt% with respect to a total weight of the spacer.

In an example embodiment, the endothermic flame retardant may be or include a hydroxide inorganic compound.

In an example embodiment, the fiberized polymer may include at least one of polytetrafluoroethylene, cellulose nanofibril, and polycaprolactam.

In an example embodiment, a mass ratio of the endothermic flame retardant to the fiberized polymer may be in a range of ≥ 1.5 to ≤ 49.

In an example embodiment, a fiberization rate of the fiberized polymer may be in a range of ≥ 1 % to ≤ 40 %.

In an example embodiment, an average diameter of the endothermic flame retardant may be in a range of ≥ 0.1 µm to ≤ 50 µm.

In an example embodiment, each of the battery cells may include an electrode assembly including a positive electrode, a negative electrode, and a separator between the positive electrode and the negative electrode, and a conductive metal case in which the electrode assembly is included.

Another example embodiment of the present disclosure includes a method of manufacturing a spacer, the method including forming a mixture by mixing an endothermic flame retardant and a polymer powder, pressing the mixture, and forming a spacer by molding the mixture, wherein the spacer includes a polymer matrix and an endothermic flame retardant dispersed in the polymer matrix. The polymer matrix includes a fiberized polymer, and the endothermic flame retardant is included in a content in a range of ≥ 60 wt% to ≤ 98 wt% with respect to a total weight of the spacer.

In an example embodiment, the endothermic flame retardant may be or include a hydroxide inorganic compound.

In an example embodiment, the fiberized polymer may include at least one of polytetrafluoroethylene, cellulose nanofibril, and polycaprolactam.

In an example embodiment, a mass ratio of the endothermic flame retardant to the fiberized polymer may be in a range of ≥ 1.5 to ≤ 49.

In an example embodiment, a fiberization rate of the fiberized polymer may be in a range of ≥ 1 % to ≤ 40 %.

In an example embodiment, an average diameter of the endothermic flame retardant may be in a range of ≥ 0.1 µm to ≤ 50 µm.

### BRIEF DESCRIPTION OF THE DRAWINGS

The accompanying drawings illustrate example embodiments of the present disclosure and, together with the following detailed description, serve to provide further understanding of the technical principle of the present disclosure. However, the present disclosure is not to be construed as being limited to the details shown in the drawings, in which:
FIG. 1 is a schematic perspective view illustrating an example of a battery module, according to an example embodiment of the present disclosure;
FIG. 2 is a schematic perspective view illustrating an example of a battery cell and a spacer of the battery module of FIG. 1;
FIG. 3 is a schematic cross-sectional view illustrating an example of a cross section taken along line III-III' of FIG. 2;
FIG. 4 is a scanning electron microscope (SEM) image of a fiberized polymer and an endothermic flame retardant included in a spacer of FIG. 1; and
FIG. 5 is a flowchart illustrating a method of manufacturing a spacer, according to examples of the present disclosure.

### DETAILED DESCRIPTION

Hereinafter, example embodiments of the present disclosure are described with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best description. Accordingly, example embodiments disclosed in the present specification and configurations illustrated in the drawings are merely example embodiments of the present disclosure and do not represent all of the technical ideas of the present disclosure, and thus it should be understood that there may be various equivalents and modifications that can substitute these example embodiments at the time of filing of the present application.

Further, "comprise and include" and/or "comprising and including" used in this specification should be interpreted as specifying the presence of described shapes, numbers, steps, operations, members, elements, and/or groups thereof and do not exclude the presence or addition of other shapes, numbers, operations, members, elements, and/or groups thereof.

In addition, for a better understanding of the present disclosure, the accompanying drawings are not illustrated on an actual scale and sizes of some elements can be exaggerated. In addition, the same reference numbers may be assigned to the same components in different embodiments.

It is understood that, although the terms "first," "second," and the like, are used herein to describe various elements, these elements should not be limited by these terms. These terms are only used to distinguish one element from another element, and a first element may also be a second element unless particularly described otherwise.

Through the specification, each element may be singular or plural unless particularly described otherwise.

When it is said that an arbitrary element is disposed on "an upper portion (or a lower portion)" of an element or disposed "above (or below)" an element, this may not only mean that the arbitrary element is disposed in contact with an upper surface (or a lower surface) of the element, but also mean that another element may be interposed between the element and the arbitrary element disposed above (or below) the element.

Also, when it is said that a certain element is "connected" or "coupled" to another element, this may mean that the elements are directly connected or coupled to each other, but it should be understood that another element may be "interposed" between the elements or the elements may be "connected" or "coupled" to each other via another element. Further, the term "electrically coupled" may mean not only "directly coupled" but also may include "coupled via other interposing element."

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

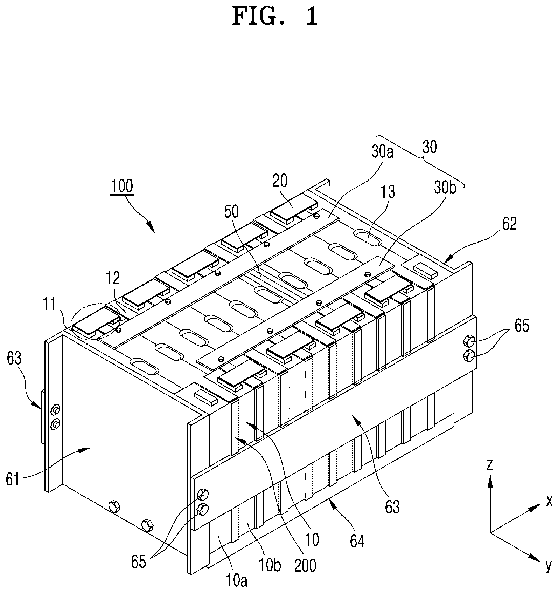

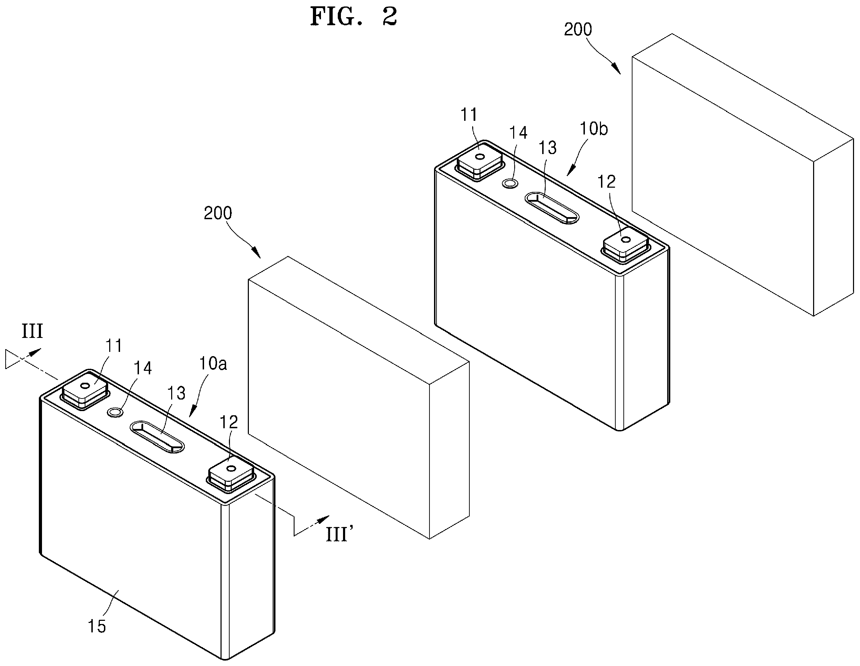

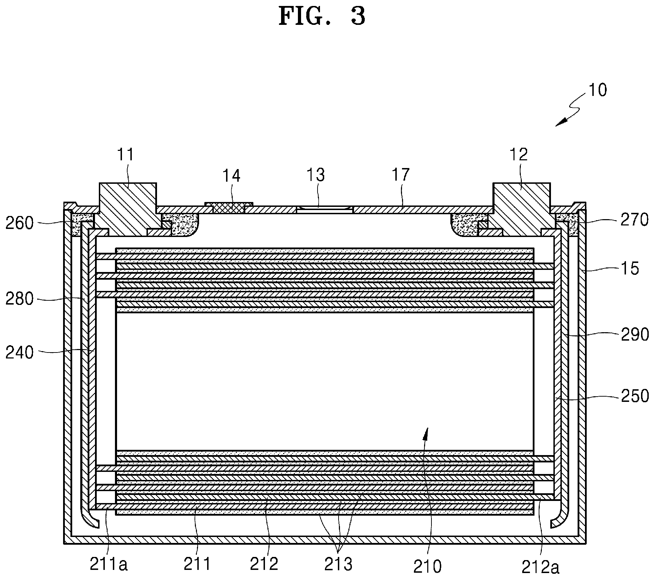

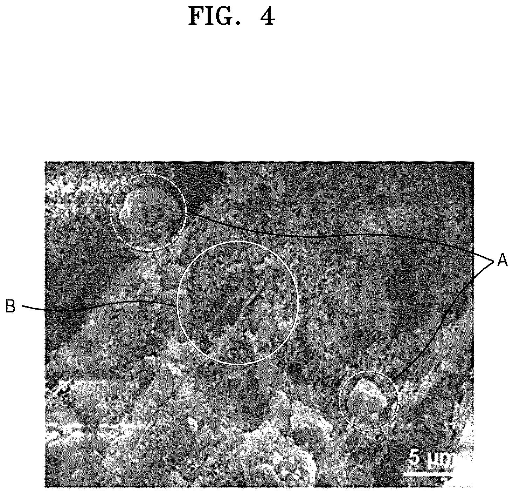

FIG. 1 is a schematic perspective view illustrating an example of a battery module 100, according to an example embodiment of the present disclosure. FIG. 2 is a schematic perspective view illustrating an example of a battery cell 10 and a spacer 200 of the battery module 100 of FIG. 1. FIG. 3 is a schematic cross-sectional view illustrating an example of a cross section taken along line III-III' of FIG. 2.FIG. 4 is a scanning electron microscope (SEM) image of a fiberized polymer and an endothermic flame retardant included in the spacer of FIG. 1.

First, referring to FIGS. 1 to 3, the battery module 100 according to an example embodiment of the present disclosure may include a plurality of battery cells 10 arranged in one direction, spacers 200 positioned between the battery cells 10, and a pair of end plates 61 and 62 positioned at opposite ends of the plurality of battery cells 10.

The plurality of battery cells 10 may be arranged in one direction such that wide surfaces of the battery cells 10 face each other, and the plurality of arranged battery cells 10 may be fixed by housings 61, 62, 63, and 64.

The housings 61, 62, 63, and 64 may include the pair of end plates 61 and 62 facing the wide surfaces of the battery cells 10, and side plates 63 and a bottom plate 64 which connect the pair of end plates 61 and 62 together.

The pair of end plates 61 and 62 may be respectively positioned at opposite ends of the plurality of battery cells 10 to press the plurality of battery cells 10. Thus, internal components of the battery module 100 including the battery cells 10 may be substantially protected from an external impact, and physical deformation such as a swelling phenomenon may be reduced or prevented from occurring in the battery module 100.

The side plate 63 may support a side surface of the battery cell 10, and the bottom plate 64 may support a bottom surface of the battery cell 10. In addition, the pair of end plates 61 and 62, the side plate 63, and the bottom plate 64 may be connected to each other by members such as, e.g., bolts 65, or the like.

Each of the plurality of battery cells 10 may be equipped with terminal portions 11 and 12 electrically connected to a connection tab 20 and a vent 13 which is a discharge passage for any gas that may be generated internally. The terminals portions 11 and 12 of the battery cell 10 may be a first terminal 11 and a second terminal 12, respectively, having different polarities. As an example, when the first terminal 11 is a positive electrode terminal, the second terminal 12 may be a negative electrode terminal, and conversely, when the first terminal 11 is a negative electrode terminal, the second terminal 12 may be a positive electrode terminal. That is, the first terminal 11 and the second terminal 12 are configured to have different electrical polarities and are not limited to a specific polarity.

The terminal portions 11 and 12 of adjacent battery cells 10a and 10b may be electrically connected to each other in series, or in parallel, by the connection tab 20 that is described below. Although an example of serial connection is described with reference to FIG. 1, the present disclosure is not limited to such a structure, and various connection structures may be adopted as needed. In addition, the number and arrangement of the battery cells 10 are not limited to the structure shown in FIG. 1 and may be changed as desired.

For example, the battery module 100 includes the connection tab 20 connecting one battery cell 10a to another battery cell 10b adjacent thereto, and a protection circuit module 30 having one end portion connected to the connection tab 20.

The protection circuit module 30 may be or include a battery management system (BMS). The connection tab 20 includes a body portion in contact with the terminal portions 11 and 12 between adjacent battery cells 10a and 10b, and an extension portion that extends from the body portion and is connected to the protection circuit module 30.

The protection circuit module 30 may be configured with electronic components and protection circuits, and may be electrically connected to the connection tab 20.

The protection circuit module 30 may include a first protection circuit module 30a and a second protection circuit module 30b which extend at different positions in a direction in which the plurality of battery cells 10 are arranged. In this case, the first protection circuit module 30a and the second protection circuit module 30b may be spaced apart from each other by a given distance and may be positioned parallel to each other, and each of the first protection circuit module 30a and the second protection circuit module 30b may be electrically connected to an adjacent connection tab 20.

For example, the first protection circuit module 30a may be configured to extend at one upper side of the plurality of battery cells 10 in the direction in which the plurality of battery cells 10 are arranged, and the second protection circuit module 30b may be configured to extend at the other upper side of the plurality of battery cells 10 in the direction in which the plurality of battery cells 10 are arranged. The second protection circuit module 30b may be spaced a given interval apart from the first protection circuit module 30a, with the vent 13 interposed therebetween, and may be configured to be parallel to the first protection circuit module 30a.

Accordingly, the two protection circuit modules 30a and 30b are configured to be parallel to, and spaced apart from, each other in the direction in which the plurality of battery cells 10 are arranged, thereby reducing or minimizing an unnecessary area of a printed circuit board (PCB) constituting the protection circuit module 30.

The first protection circuit module 30a and the second protection circuit module 30b may be connected to each other by a conductive connection member 50. For example, one side of the connection member 50 may be connected to the first protection circuit module 30a, and the other side thereof may be connected to the second protection circuit module 30b so that an electrical connection may be established between the two protection circuit modules 30a and 30b.

The connection may be performed through any one method of, e.g., soldering, resistance welding, laser welding, and projection welding methods.

The connection member 50 may be, for example, an electric wire. In addition, the connection member 50 may be made of or include an elastic or flexible material. Through the connection member 50, it is possible to check and manage whether the voltage, temperature, and current of the plurality of battery cells 10, are normal or within a desired range.

For example, information such as a voltage, a current, and a temperature received by the first protection circuit module 30a from the connection tabs 20 adjacent thereto, and information such as a voltage, a current, and a temperature received by the second protection circuit module 30b from the connection tabs 20 adjacent thereto, may be integrally managed by the protection circuit module 30 through the connection member 50.

For example, when the battery cell 10 swells, an impact is substantially absorbed due to the elasticity or flexibility of the connection member 50, thereby reducing or preventing damage to the first and second protection circuit modules 30a and 30b.

For example, the shape and structure of the connection member 50 are not limited to the shape illustrated in FIG. 1.

In examples, because the protection circuit module 30 is provided as the first and second protection circuit modules 30a and 30b, the area of the PCB constituting the protection circuit module 30 may be reduced or minimized, thereby securing a space inside the battery module 100. Thus, a fastening operation of connecting the connection tab 20 and the protection circuit module 30 may be facilitated, and a repair thereof may also be facilitated when an abnormality is detected in the battery module 100, thereby improving operation efficiency.

For example, as shown in FIG. 3, the battery cell 10 may include a case 15 for a battery, an electrode assembly 210 accommodated in the case 15 for the battery, and an electrolyte. The electrode assembly 210 and the electrolyte electrochemically react with each other to generate energy.

The battery cell 10 may include at least one electrode assembly 210 in which a separator 213, which is an insulator, is interposed between a positive electrode 211 and a negative electrode 212 and then wound, and the case 15 in which the electrode assembly 210 is included.

An example in which the battery cell 10 according to an example embodiment is a prismatic lithium ion battery cell is described. However, the present disclosure is not limited thereto, and the present disclosure may be applied to various types of battery cells such as, e.g., lithium polymer battery cells or cylindrical battery cells.

The positive electrode 211 and the negative electrode 212 may include coated portions which are areas in which an active material is applied onto a current collector made of or including thin metal foil, and uncoated portions 211a and 212a which are areas which are not coated with an active material.

The positive electrode 211 and the negative electrode 212 may be wound after the separator 213, which is the insulator, is interposed therebetween. However, the present disclosure is not limited thereto, and the electrode assembly 210 may have a structure in which the positive electrode 110 and the negative electrode 120, each including a plurality of sheets, are alternately stacked with the separator 213 interposed therebetween.

The case 15 may form the overall exterior of the battery cell 10, and may be made of or include a conductive metal such as, e.g., at least one of aluminum, an aluminum alloy, or nickel-plated steel. In addition, the case 15 may provide a space in which the electrode assembly 210 is accommodated.

The battery cell 10 may include a cap plate 17 that covers an opening of the case 15, and the case 15 and the cap plate 17 may be made of or include a conductive material. Herein, the first terminal 11 and the second terminal 12 electrically connected to the positive electrode 211 and the negative electrode 212 may be configured to pass through the cap plate 17 and protrude to the outside.

In addition, outer peripheral surfaces of upper pillars of the first terminal 11 and the second terminal 12, which protrude outward from the cap plate 17, may be threaded and fixed to the cap plate 17 through a fixing device such as, e.g., nuts.

However, the examples of the present disclosure are not limited thereto, and the first terminal 11 and the second terminal 12 may have a rivet structure to be riveted, or may be welded and coupled to the cap plate 17.

In addition, the cap plate 17 may be made of or include a thin plate, and may be coupled to the opening of the case 15. An electrolyte injection port 14, on which a sealing stopper may be installed, may be configured in the cap plate 17, and the vent 13 in which a notch is formed, may be installed.

The first terminal 11 and the second terminal 12 may be electrically connected to current collectors including first and second current collectors 240 and 250, hereinafter referred to as positive and negative electrode current collectors, joined to a positive electrode uncoated portion 211a and a negative electrode uncoated portion 212a through welding.

For example, the first terminal 11 and the second terminal 12 may be coupled to the positive and negative electrode current collectors 240 and 250 through welding. However, the present disclosure is not limited thereto, and the first terminal 11 and the second terminal 12 and the positive and negative electrode current collectors 240 and 250 may be integrally coupled to each other.

In addition, an insulating member may be installed between the electrode assembly 210 and the cap plate 17. Herein, the insulating member may include first and second lower insulating members 260 and 270, and each of the first and second lower insulating members 260 and 270 may be installed between the electrode assembly 210 and the cap plate 17.

In addition, according to the present example embodiment, one end portion of a separation member that may be installed to face one side surface of the electrode assembly 210 may be installed between the insulating member and each of the first terminal 11 and the second terminal 12.

Herein, the separation member may include first and second separation members 280 and 290.

Accordingly, one end portions of the first and second separation members 280 and 290 that may be face one side surface of the electrode assembly 210 may be installed between the first and second lower insulating members 260 and 270 and the first and second terminals 11 and 12.

As a result, the fist terminal 11 and the second terminal 22, which are coupled to the positive electrode current collector 240 and the negative electrode current collector 250, may be coupled to the first and second lower insulating members 260 and 270 and ends of the first and second separation members 280 and 290.

For example, referring to FIGS. 1 and 2, a spacer 200 may be disposed between the battery cells 10. Adjacent battery cells 10a and 10b are prevented from being direct contact with each other, thereby reducing or preventing chain explosions of aligned battery cells 10 due to high-temperature heat transfer. The spacer 200 may be configured to have a size corresponding to the wide surface of the battery cell 10.

The spacer 200 may include a polymer matrix and an endothermic flame retardant dispersed in the polymer matrix, thereby substantially absorbing heat released in the event of fire to reduce or prevent a temperature rise.

The polymer matrix may include a fiberized polymer. Because conventional materials used as spacers have required additional materials such as a binder, there has been a limitation in adding an endothermic flame retardant in a content in a range of about 40 wt% or more. However, in a composite material according to the present disclosure, because a fiberizable material having adhesion is used, a content of an endothermic flame retardant may be increased to about 60 wt% or more.

Such a fiberized polymer may include at least one of polytetrafluoroethylene, cellulose nanofibril, and polycaprolactam, but one or more embodiments are not limited thereto.

The endothermic flame retardant may be included in a content in a range of ≥ 60 wt% to ≤ 98 wt% with respect to the total weight of the spacer 200. Accordingly, even when the spacer 200 is formed thinly, the heat absorption performance and heat resistance performance of the spacer 200 may be achieved, and the packing density of the battery module 100 may be increased. In addition, a mass ratio of the endothermic flame retardant to the fiberized polymer may be in a range of ≥ 1.5 to ≤ 49.

When the content of the endothermic flame retardant is less than about 60 wt% of the total weight of the spacer 200, flame retardant and heat absorption effects may be insufficient, and thus the packing density may decrease due to an increase in thickness of the composite material. Conversely, when the endothermic flame retardant is included in a content exceeding about 98 wt% of the total weight of the spacer 200, the polymer material may not be able to function as a matrix, which may cause a difficulty in manufacturing the spacer 200.

For example, when the mass ratio of the endothermic flame retardant to the fiberized polymer is less than about 1.5, a flame retardant effect may not be exhibited, and when the mass ratio exceeds about 49, there may be a challenge in implementing the composite material.

Such an endothermic flame retardant may be or include a hydroxide inorganic compound. The endothermic flame retardant may include at least one of magnesium hydroxide, aluminum hydroxide, antimony trioxide, and antimony pentoxide, but one or more example embodiments are not limited thereto.

FIG. 4 is a scanning electron microscope (SEM) image of the fiberized polymer and the endothermic flame retardant included in the spacer of FIG. 1. FIG. 4 shows fiberized polytetrafluoroethylene (B) and magnesium hydroxide (A) prepared according to an example embodiment.

The present disclosure describes a spacer that includes a fiberized polymer, and thus does not require additional materials excluding a polymer material and a flame retardant, and includes an endothermic flame retardant in a content in a range of about 60 wt% or more by using a fiberizable material with adhesion, thereby having a desired or improved flame retardant effect.

For example, when fiberization is insufficient within a polymer matrix, a binding force of a flame retardant in a matrix may be low, which may make it challenging to increase a content of an endothermic flame retardant. Conversely, when a polymer matrix is excessively fiberized, there may be a challenge in that an endothermic flame retardant is delaminated rather than bound to a fiberized polymer. Therefore, a fiberization rate of the fiberized polymer in the matrix may be in a range of ≥ 1% to ≤ 40%.

In an example, the endothermic flame retardant may have an average diameter of ≥ 0.1 µm to ≤ 50 µm, and may be included in a content ratio of ≥ 60 wt% to ≤ 98 wt% with respect to the total weight of the spacer 200. As a diameter of the endothermic flame retardant decreases, a surface area may be increased, and flame retardancy may be improved. However, when the diameter is less than about 0.1 µm, there may be a challenge with respect to the bonding force. Conversely, when the diameter exceeds about 50 µm, there may be a challenge in that flame retardancy is reduced.

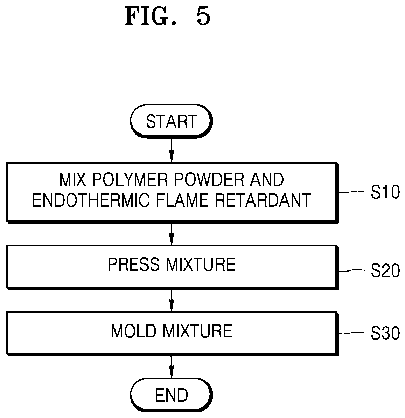

FIG. 5 is a flowchart illustrating a method of manufacturing a spacer according to examples of the present disclosure.

As shown in FIG. 5, the method of manufacturing a spacer according to the present disclosure includes operation S10 of mixing a polymer powder and an endothermic flame retardant, operation S20 of pressing the mixture of the polymer powder and the endothermic flame retardant, and operation S30 of molding the pressed mixture of the polymer powder and the endothermic flame retardant. The contents of the polymer powder and the endothermic flame retardant may be determined in consideration of processability and flame retardant performance.

A mixing process may be for performed by applying a shear force to a polymer material to achieve fiberization and substantially uniformly mixing materials and may be performed by using, e.g., a ball mill, a high speed mixer, or an internal mixer, but one or more example embodiments are not limited thereto.

In addition, a mixing time and a mixing temperature may vary according to a method. For example, when polytetrafluoroethylene is used, the mixing process may be performed for at least about 1 minute at a temperature of about 30°C or more, but one or more example embodiments are not limited thereto.

A pressing process may be performed for bonding a flame retardant to a polymer material present in an independent powder form, and may be performed manually or using automated equipment.

When necessary, an operation of improving a bonding force of the prepared mixture may be further performed. For example, mechanical properties may be improved by repeating a roll mill process, and the bonding force and shape freedom of the mixture may be changed by optimizing a process.

The present disclosure is described in more detail through the following Examples.

### Example 1:

A polymer powder and an endothermic flame retardant were mixed and then pressed to prepare a composite material. The composite material was prepared by adding cellulose nanofibrils and magnesium hydroxide as a polymer and a flame retardant in a weight ratio of 5:95.

### Comparative Example 1:

Cellulose nanofibrils to which magnesium hydroxide was not added were used as a composite material of Comparative Example 1.

### Comparative Example 2:

A composite material was prepared in the same manner as in Example 1, with a difference that cellulose nanofibrils and magnesium hydroxide were added in a weight ratio of 90:10.

### Comparative Example 3:

A composite material was prepared in the same manner as in Example 1, with a difference that cellulose nanofibrils and magnesium hydroxide were added in a weight ratio of 75:25.

### Comparative Example 4:

A composite material was prepared in the same manner as in Example 1, with a difference that cellulose nanofibrils and magnesium hydroxide were added in a weight ratio of 50:50.

Table 1 below shows addition ratios of cellulose nanofibrils and magnesium hydroxide in Example 1 of the present disclosure, and in Comparative Examples.

**Table 1:**

| | Comparative Example 1 | Comparative Example 2 | Comparative Example 3 | Comparative Example 4 | Example 1 |
|---|---|---|---|---|---|
| Cellulose nanofibrils (parts by weight) | 100 | 90 | 75 | 50 | 5 |
| Magnesium hydroxide (parts by weight) | - | 10 | 25 | 50 | 95 |

### Experimental Example 1: Flame retardancy evaluation

Flame retardancy evaluation was performed on the prepared composite materials of Example 1 and Comparative Examples 1 to 4. Flame retardancy was evaluated based on a flame retardancy grade according to the UL94 method, a limited oxygen index, and a heat release value.

Table 2 below shows results of flame retardancy evaluation according to Experimental Example 1 of the present disclosure.

**Table 2:**

| | Comparative Example 1 | Comparative Example 2 | Comparative Example 3 | Comparative Example 4 | Example 1 |
|---|---|---|---|---|---|
| UL-94 test | - | - | V-2 | V-1 | V-0 |
| Limited oxygen index (%) | 20 | 25 | 33 | 50 | Over 95 |
| Total heat release (MJ/m²) | 40 | 32 | 28 | 13 | 3 |

Referring to Table 2 above, as compared to pure cellulose nanofibrils (Comparative Example 1), the flame retardancy rating was evaluated to be better as a content of magnesium hydroxide increased. As a result of the flame retardancy evaluation, Example 1 had a flame retardancy rating of V-0, a limited oxygen index (LOI) of 95% or more, and a total heat release (THR) of 3 MJ/m², which showed a desired or improved flame retardant effect.

According to example embodiments of the present disclosure, a spacer positioned between battery cells may absorb heat released in the event of a battery fire, thereby reducing or preventing a temperature rise and a chain reaction of fire.

However, the effects that can be achieved through the present disclosure are not limited to the above-described effects, and other technical effects that are not described herein are clearly understood by those skilled in the art from the following disclosure.

Although the present disclosure has been described with limited example embodiments and drawings, the present disclosure is not limited thereto, and instead, it is understood by those skilled in the art that various modifications and changes may be made to these example embodiments without departing from the principles and spirit of the present disclosure, the scope of which is defined by the claims and their equivalents.

## Claims

1. A spacer (200) comprising:
a polymer matrix; and
an endothermic flame retardant dispersed in the polymer matrix,
wherein the polymer matrix comprises a fiberized polymer, and
the endothermic flame retardant is included in a content in a range of ≥ 60 wt% to ≤ 98 wt% with respect to a total weight of the spacer (200).

2. The spacer (200) of claim 1, wherein the endothermic flame retardant comprises a hydroxide inorganic compound.

3. The spacer (200) of claim 1 or 2, wherein the fiberized polymer comprises at least one of polytetrafluoroethylene, cellulose nanofibril, and polycaprolactam.

4. The spacer (200) according to any one of claims 1 to 3, wherein a mass ratio of the endothermic flame retardant to the fiberized polymer is in a range of ≥ 1.5 to ≤ 49.

5. The spacer (200) according to any one of claims 1 to 4, wherein a fiberization rate of the fiberized polymer is in a range of ≥ 1 % to ≤ 40 %.

6. The spacer (200) according to any one of claims 1 to 5, wherein an average diameter of the endothermic flame retardant is in a range of ≥ 0.1 µm to ≤ 50 µm.

7. The spacer (200) according to any one of claims 1 to 6, wherein the endothermic flame retardant comprises at least one of magnesium hydroxide, aluminum hydroxide, antimony trioxide, and antimony pentoxide.

8. A battery module (100) comprising:
a plurality of battery cells (10); and
spacers (200) disposed between the plurality of battery cells (10),
wherein each of the spacers (200) comprises a polymer matrix, and an endothermic flame retardant dispersed in the polymer matrix,
the polymer matrix comprises a fiberized polymer, and
the endothermic flame retardant is included in a content in a range of ≥ 60 wt% to ≤ 98 wt% with respect to a total weight of the spacers (200).

9. The battery module (100) of claim 8, wherein the endothermic flame retardant comprises a hydroxide inorganic compound.

10. The battery module (100) of claim 8 or 9, wherein the fiberized polymer comprises at least one of polytetrafluoroethylene, cellulose nanofibril, and polycaprolactam.

11. The battery module (100) according to any one of claims 8 to 10, wherein a mass ratio of the endothermic flame retardant to the fiberized polymer is in a range of ≥ 1.5 to ≤ 49.

12. The battery module (100) according to any one of claims 8 to 11, wherein a fiberization rate of the fiberized polymer is in a range of ≥ 1 % to ≤ 40 %.

13. The battery module (100) according to any one of claims 8 to 12, wherein an average diameter of the endothermic flame retardant is in a range of ≥ 0.1 µm to ≤ 50 µm.

14. The battery module (100) according to any one of claims 8 to 13, wherein each of the battery cells (10) comprises an electrode assembly (210) comprising a positive electrode (211), a negative electrode (212), and a separator (213) between the positive electrode (211) and the negative electrode (212), and a conductive metal case in which the electrode assembly (210) is included.

15. A method of manufacturing a spacer (200), the method comprising:
forming a mixture by mixing an endothermic flame retardant and a polymer powder;
pressing the mixture of the endothermic flame retardant and the polymer powder; and
forming a spacer (200) by molding the mixture of the endothermic flame retardant and the polymer powder,
wherein the spacer (200) comprises a polymer matrix, and an endothermic flame retardant dispersed in the polymer matrix,
the polymer matrix comprises a fiberized polymer, and
the endothermic flame retardant is included in a content in a range of ≥ 60 wt% to ≤ 98 wt% with respect to a total weight of the spacer (200).
